Europäisches Patentamt

(19) European Patent Office

Office européen des brevets

(11) Publication number: **0 197 199**
**A1**

## (12) EUROPEAN PATENT APPLICATION

(21) Application number: **85115616.6**

(22) Date of filing: **09.12.85**

(51) Int. Cl.⁴: **G 01 B 11/06**

(30) Priority: **22.03.85 JP 59162/85**

(43) Date of publication of application:
**15.10.86 Bulletin 86/42**

(84) Designated Contracting States:
**DE FR GB**

(71) Applicant: **Dainippon Screen Mfg. Co., Ltd.**
**1-1, Tenjinkitamachi Teranouchi-agaru 4-chome**
**Horikawa-dori**
**Kamikyo-ku Kyoto-shi Kyoto-fu(JP)**

(72) Inventor: **Kikkawa, Atsushi**
**52-9 Kasuga-cho Takatsuki**
**Osaka(JP)**

(72) Inventor: **Kondo, Noriyuki**
**6-3 Nishsakaidani-cho Oharano**
**Nishikyo-ku Kyoto(JP)**

(74) Representative: **Goddar, Heinz J., Dr. et al,**
**FORRESTER & BOEHMERT Widenmayerstrasse 4/I**
**D-8000 München 22(DE)**

(54) Apparatus for and a method of measuring the thickness of a film.

(57) Apparatus for and a method of measuring the thickness of a film are described. The apparatus comprises a light source (5 or 5a) for illuminating a specimen (2) carrying a film. Light reflected from the specimen is incident on a diffraction grating spectrum provided by the grating (8) is received by a one-dimensional array (16) of photosensitive elements. Parallel signals output by the array (16) are converted by a parallel-to-series conversion circuit (17) and an analogue-to-digital converter (18) into digital series signals which are processed by signal processing means (20) which then compares the received processed spectrum data with stored reference spectrum data to determine the thickness of the film.

Fig. 2

Croydon Printing Company Ltd.

Apparatus for and a method of measuring the thickness of a film.

THIS INVENTION relates to apparatus for and a method of measuring the thickness of a film. In particular this invention relates to apparatus for and a method of measuring the thickness of a transparent film formed on a substrate, such as in a photomask or wafer for the manufacture of integrated circuits (hereinafter called "ICs").

Photoresist film, silicone oxide film or the like, when deposited on the substrate of a photomask or wafer for IC use, generally forms an extremely thin transparent film having a thickness of approximately 400 $\overset{o}{A}$ to 30,000 $\overset{o}{A}$. The typical line width of an IC pattern obtained thereon through exposure, development, etching, etc., is approximately 0.3 $\mu$m to 100 $\mu$m.

For proper production control of ICs, therefore, film thickness measuring apparatus is needed with which such film thickness can be measured accurately with high repeatability. In known devices for measuring film thickness there has commonly been used a method in which measurement is made of the diffracted reflection spectra for a large number of reference specimens. The reference values are stored in the memory of a signal processing device such as a microcomputer, and then measurement is taken of the diffracted light reflection spectrum of the specimen to be measured thereby to determine the specimen film thickness by the ratio of its spectral photo-intensity to the reference specimens.

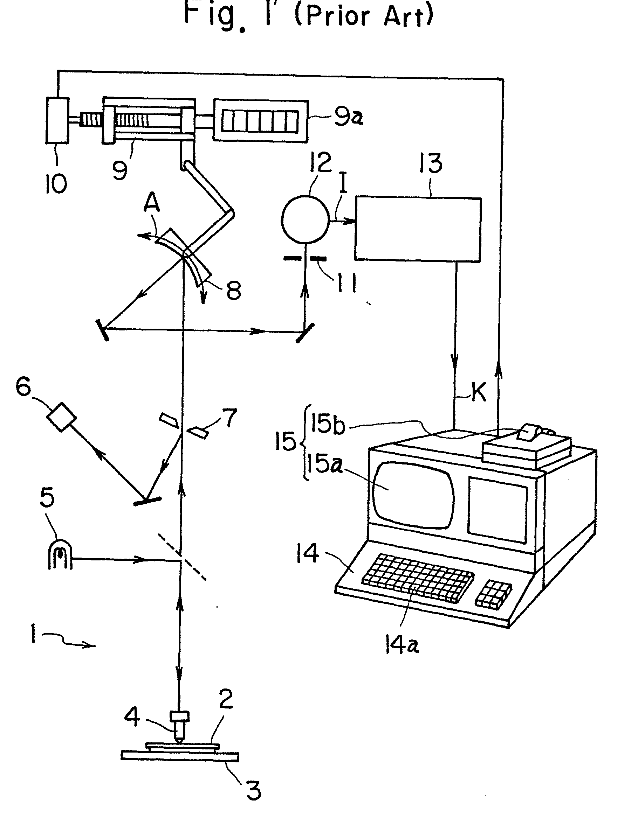

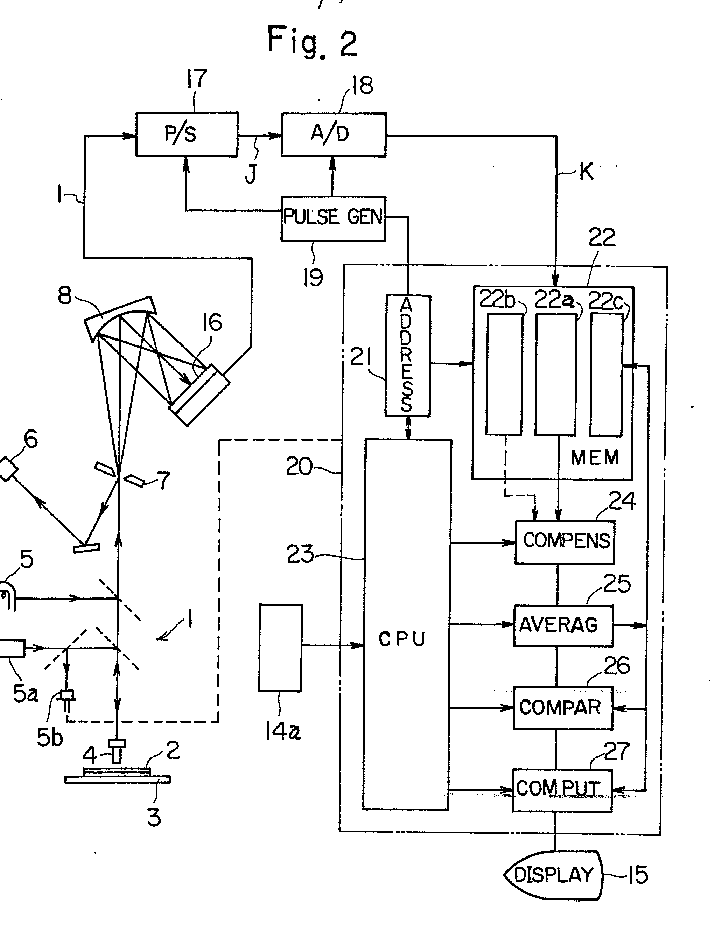

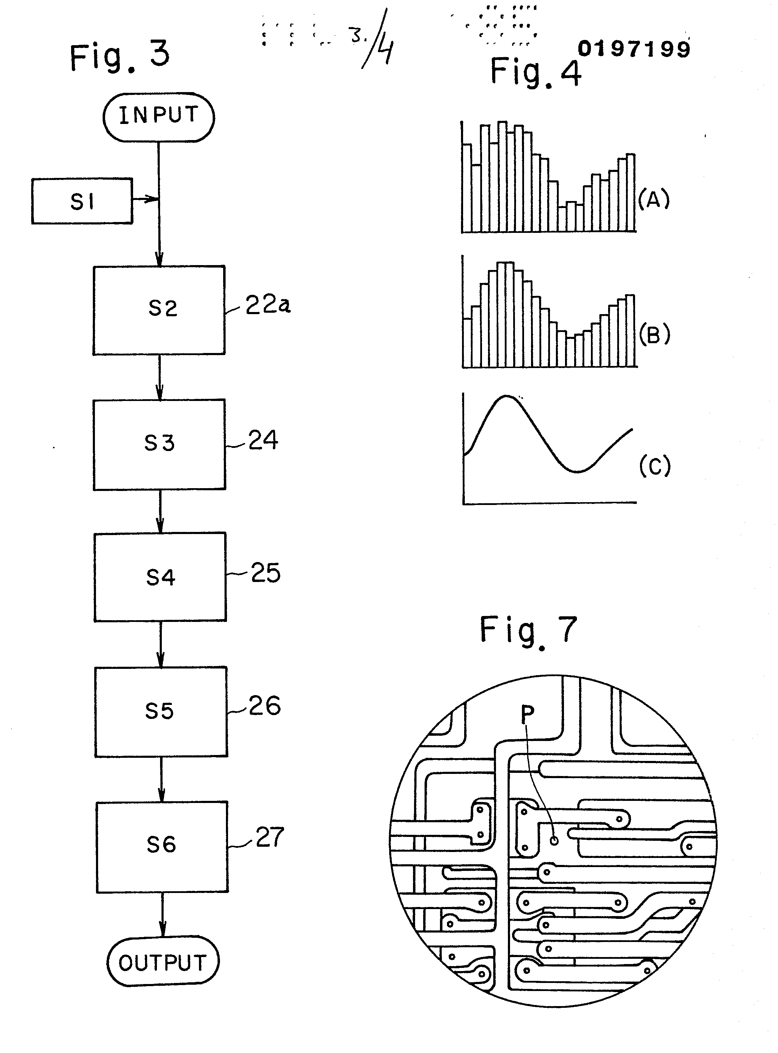

Figure 1 of the accompanying drawings depicts previously proposed apparatus of this type. In Figure 1, a specimen 2 is set on a specimen mount 3 of a microscope 1 and a white light source 5 illuminates the specimen through an object lens 4. An eyeglass 6 is provided for observing the surface of the specimen 2 as well as for focal point adjustment 7. The eyeglass 6 has a small aperture for allowing through-passage of light reflected from the specimen 2. A concave diffraction grating 8 is provided to generate a diffracted spectrum, and a sweeping or scanning device 9 sweeps or scans a given wavelength range, e.g. 400-800 nm with the concave diffraction grating 8, turning the grating in the direction of the arrow A. 9a is a wavelength counter, 10 a stepper motor, 11 a slit, 12 a photomultiplier tube, and 13 a current-voltage converter with built-in amplifier. A microcomputer 14 controls the stepper motor 10 and also carries out statistical processing of a photo intensity signal K supplied by the current-voltage converter 13 in order to determine the film thickness. The result, as necessary, is output to an output device 15 such as a cathode ray tube (CRT) 15a or a printer 15b. 14a is a keyboard of the computer 14.

With this previously proposed film thickness measuring apparatus, the film thickness is measured as follows. With specimen 2 placed on the specimen mount 3 of the microscope, the measuring apparatus is activated with the intersection point of two marking lines or cross-hairs of the microscope concident with a measuring point P, best seen in Figure 7 of the accompanying drawings, of the specimen 2, this matching being confirmed through the eyeglass 6. Reflected light from specimen 2 passes through the optical system, and is incident on the concave diffraction grating 8. The concave diffraction grating 8 generates a diffracted spectrum corresponding to any given wavelength in a predetermined range, e.g. 400-800 nm, the grating being rotated via the sweeping or scanning device 9 by the stepper motor 10. This diffracted spectrum passes through the slit 11 into the fixed photomultiplier tube 12 and generates a serial spectrum signal I synchronous with the sweeping of the concave diffraction grating 8. Then a photo-intensity signal K is obtained that corresponds to the reflection spectrum multiplied by the current-voltage converter 13. This photo-intensity signal K is processed by the microcomputer 14 for computation of film-thickness, and the resulting computation of the thickness is displayed or printed out on the output device 15. Prior to measurement of specimen 2, measurement is made of the diffracted reflected spectra of a multiplicity of reference specimens of known film thickness, and the data for these are stored in the microcomputer 14, as mentioned above, to serve as reference data. In this technique where the spectral signals are obtained from the photomultiplier tube serially and synchronously with the scanning of the concave diffraction grating, the diffracted spectral signals are output successively during the scanning or sweeping. Hence there is a limitation due to shortness of the measuring time, this being particularly the case when the sweeping is done a plurality of times for more measured data. Furthermore, during this sweeping the device is subject to external disturbances, for example variations in the intensity of the light source due to mechanical vibration, and this may reduce the measurement precision.

It is an object of the present invention to overcome or at least mitigate the above-mentioned problems.

According to one aspect of the present invention there is provided apparatus for measuring the thickness of a film, the apparatus comprising: a diffraction grating for receiving light reflected by a film and for providing a diffraction spectrum of the light received thereby; photosensitive means for detecting a diffraction spectrum provided by the diffraction grating, the photosensitive means comprising an array of a photosensitive elements for each providing a signal representing light received thereby; and means for processing signals output by the photosensitive elements to determine the thickness of the film.

Preferably, the photosensitive means further comprises a parallel-to-serial converter for converting signals output in parallel by the photosensitive means into series signals. Generally the photosensitive means outputs analogue signals and an analogue-to-digital converter is provided for converting the analogue signals into digital signals for supply to the signal processing means.

In another aspect, the present invention provides film thickness measuring apparatus, comprising: a light source for illuminating a film specimen; a magnifying optical system for projection under magnification of light reflected by said specimen illuminated with said light source; a diffraction grating for generating a spectrum of light reflected by the film; means for photoelectrical conversion of the spectrum, comprising a one-dimensional image sensor array and a parallel-to-series conversion circuit for outputting signals serially; an analogue-to-digital converter for A/D conversion of signals output by the photoelectric conversion means; signal processing means for computing the thickness of the film specimen on the basis of output signals from the A/D converter; and output means for outputting the computed result.

Preferably, the diffraction grating is a concave diffraction grating. Alternatively, the diffraction grating may be a holographic diffraction grating. Conveniently, means may be provided for scanning or sweeping the diffraction grating so that a selected range of wavelengths can be used.

Conveniently, the A/D converter means has a resolution higher than $2^8$ and preferably a resolution of $2^{10}$.

In a preferred arrangement, the signal processing means comprises means for modifying the signals input thereto to take account of variations in the characteristics, for example sensitivity, of the individual photosensitive elements of the array.

The sensitivities of the individual elements may be stored in memory means of the signal processing means. Conveniently, the signal processing means comprises means for averaging the signals input thereto to provide an average signal for each photosensitive element and usually the signal processing means comprises comparison means for comparing the spectral information received by the array with reference data to enable the thickness of the film to be determined.

In a preferred arrangement the signal processing means comprises: a central processing unit (CPU); address designating means for designating addresses to elements of data; a memory unit for storing sensitivity information, spectral information and interim information at a respective address corresponding to each element of said one dimensional image sensor array; spectral information modifying means for modifying the spectral information on the basis of each element's sensitivity information; averaging means for computing an average of a plurality of compensated spectral information; reference data in predetermined form, based on film specimens of known thickness values; comparison means for comparing the profile of the averaged spectral information with reference data for typological discrimination within a predetermined range and also for comparing the reference spectral information with the averaged spectral information of the specimen to be examined within said typological range; and means for computing the film thickness on the basis of the comparison results.

In a further aspect, the present invention provides a method of measuring the thickness of a film, the method comprising diffracting light reflected by a film to form a diffraction spectrum which is then incident on an array of photosensitive elements, and processing signals output by the photosensitive elements of the array to determine the thickness of the film.

In another aspect the present invention provides a method for measuring the thickness of a thin transparent film, comprising the step of: magnifying an image formed by light reflected from the specimen; diffracting light reflected from the film to generate a spectrum corresponding to the film thickness to be measured; photoelectrically converting the spectrum using a one dimensional image sensor array and a parallel-to-serial conversion circuit for generation of serial output signals; converting the output signals into digital signals; and processing the digital signals by comparison with reference data relating to known film thicknesses to determine the thickness of said thin transparent film.

Preferably, the method comprises digitizing the signals at a resolution higher than $2^{10}$.

Generally, the method further comprises modifying the signals from the array during processing to take account of variations in characteristics, for example sensitivity, between individual elements of the array.

Usually, the step of processing comprises averaging a plurality of the signals from the array prior to processing the signals to determine the film thickness. Normally, the step of processing comprises the further step of comparing the distribution of the averaged signals, within a predetermined range, with a matching distribution of reference data more precisely to determine the thickness of the film.

In order that the invention may be more readily understood, an embodiment thereof will now be described, by way of example, with reference to the accompanying drawings, in which:

FIGURE I is a schematic diagram of previously proposed apparatus for measuring film thickness;

FIGURE 2 is a schematic block diagram of apparatus embodying the invention for measuring film thickness;

FIGURE 3 is a flow chart illustrating signal processing steps of the apparatus shown in Figure 2;

FIGURES 4(A) to 4(C) are graphs illustrating signal processing according to the flow chart shown in Figure 3;

Figures 5(a) to 5(d) are graphs illustrating change of spectral intensity (R) with wavelength ($\lambda$);

FIGURE 6 is enlarged view of the graph of Figure 4(C); and

FIGURE 7 shows schematically a view of part of a specimen as magnified by and seen through a microscope.

Figure 2 is a block diagram showing the principal elements of film thickness measuring apparatus embodying the present invention.

As shown in Figure 2, a specimen 2 is placed on a specimen mount 3 of a microscope. A white light source 5 illuminates the specimen via an object lens 4. An eye glass 6 is provided for observing the surface of the specimen as well as for focal part adjustment at 7. A slit is provided in the eyepiece 6 to enable light reflected from the specimen to pass through the eyepiece and be incident on a diffraction grating. As shown in Figure 2, a concave diffraction grating 8 is provided to generate a diffraction spectrum of light reflected from a film specimen 2. The concave diffraction grating 8 can be replaced by alternative equivalent means, for example a holographic diffraction grating of the flat field type. A one-dimensional image sensor array 16 composed of Charge Coupled Devices (CCD, hereinafter) is provided to receive light from the diffraction grating 8. Parallel signals output by the photosensitive elements of the array 16 are converted into series signals by a parallel to serial (P/S) conversion circuit 17. The series signals are digitised to form image signals K by an analogue-to-digital (A/D) converter 18. The A/D converter 18 has a resolution preferably of 10 bits ($2^{10}$). A timing pulse generating circuit 19 outputs timing pulse signals to the P/S conversion circuit 17, the A/D converter 18 and an address designating means 21 of a signal processing device 20 (as described more, fully below). The aforesaid one dimensional image sensor array 16 is composed of 2,048 linearly arranged elements each having dimensions of, for example, approximately 15μm x 15μm. In this case the array is capable of transducing or photoelectrically converting a spectrum, for example in the range 400 nm to 800 nm, as it is generated by the concave diffraction grating 8.

A one dimensional image sensor array in the form of a PDA (Photo Diode Array) can be used instead of the CCD array. When the A/D converter 18 has 10 bits of resolution, the signals J output serially after amplification by the P/S conversion circuit 17 can be converted into digital signals K of 1024 resolution graduation levels. Experimental data has shown that when a 12-bit A/D converter is used good reproductibility is ensured even when the signal level is subdivided into 4,096 resolution graduations. Such digital signals K are written into respective ones of 2,043 different addresses in a spectral information memory section 22a of an internal memory 22 of the signal processing device 20 with the aid of the address designating means 21, when the image sensor array used consists of 2,048 elements as mentioned above.

The signal processing device 20 is composed of a central processing unit (hereinafter called "CPU") 23, the address designating means 21, the memory 22 for storing information such as spectral information, a spectral information compensation or modifying means 24, an averaging means 25, comparison means 26 for comparing the measured data with reference specimens or reference data, and a film thickness computing means 27, these components being so arranged that the thickness of the film specimen is calculated and output to output device 15 according to the flow chart shown in Figure 3.

It is generally necessary to compensate or modify the 2,048 pieces of spectral information stored in the spectral information memory sector 22a because the outputs from respective elements of the one dimensional image sensor array 16 can be expected to vary, dependent on the element's sensitivity, by up to + or - 10% and, furthermore, a slight dark current is present even when no element is exposed to light. Therefore, the intensity of the dark current $D_i$ (i = 1....2,024) and the sensitivity $S_i$ (i = 1....2,024) are prestored as sensitivity information in the sensitivity information memory sector 22b and sensitivity information $D_i$ and $S_i$ are read out corresponding to each spectral information $X_i$ (i = 1....2,024) for compensation or modification to be made by the spectral information compensating or modification means 24 according to, for example, the equation $X_i' = (X_i - D_i) /(S_i - D_i)$, where $X_i'$ is the modified spectral information for the ith element, thereby to approximate the signal level of the digital image signal K as spectral information.

The compensated spectral information is then statistically treated, e.g. by averaging in the averaging means 25, and comparison is made with data obtained on reference specimens of known thickness to enable the film thickness of the specimen to be computed thereafter. Such averaging methods are believed to be well known to those skilled in the art and here, with a given element as the central one of five adjacent elements, two elements on either side of the given element are selected and the five elements are averaged to obtain the average to be taken as the output value for the central element. This averaging process can be repeated , e.g. three times, for improved precision.

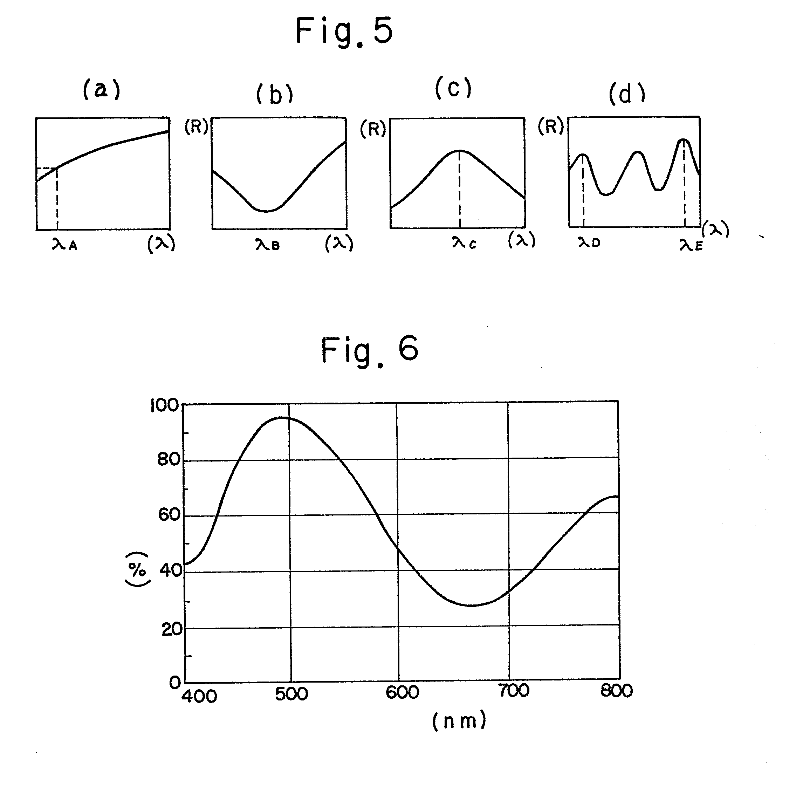

The pieces of spectral information thus averaged are then compared in the next comparison means 26 with the reference sorted data classified for the individual ranges of film thickness and, as exemplified in Figure 5 (which illustrates graphically various ways in which the spectral intensity R may change with wavelength$\lambda$), discrimination is made into cases of (a) a monotonal increase of intensity with wavelength (Figure 5a), (b) with one minimum (Figure 5b), (c) with one maximum (Figure 5c) and (d) with more than one minimum and maximum (Figure 5d). Thereafter, the film thickness is computed according to the spectral information by the film thickness computing means 27 for the aforesaid individual cases shown in Figures 5a to 5d.

If the profile of the spectral information about the specimen to be measured is as shown in Figure 5(a), first the spectral photointensity $R_A$ for a given wavelength $\lambda_A$ is obtained, the obtained intensity $R_A$ is then compared with a large number of stored spectral photo-intensities of a plurality of references specimens thus to retrieve the reference specimen best matching the spectral photo-intensity $R_A$ for the aforesaid wavelength $\lambda_A$. If any of the reference specimens is found to match the specimen measured, then the thickness of the particular reference specimen is determined to be the film thickness sought. If no matching reference specimen is found, then two approximating reference specimens are taken for the specimen's film thickness to be obtained by interpolation between them. Such a method is frequently used as a "calibration method" in the field of measuring devices, etc. The above-described film thickness computation technique is applicable to the cases of Figure 5(b), (c) and (d) as well, and the measuring precision can be easily improved by increasing the number of reference specimens stored in the memory sector 22c, by increasing the amount of data on each specimen, and further by increasing the number of specific wavelengths corresponding to the spectral photo-intensity to be compared.

Figures 4A to 4C are graphs showing stages of the signal processing according to the flow chart shown in Figure 3 and plotting the graduated wavelength in nm on the abscissa or $x$ axis against the signal level on the ordinate or y axis.

The operation of the film thickness measuring apparatus described above is discussed below with reference to Figures 2 to 4. When key 14a of the signal processing device 20 has been actuated to start the film thickness measuring apparatus, the individual elements of the one dimensional image sensor array 16 accumulate, in step $S_1$, the spectral quantities of light from the concave diffraction grating for the preset integrating time of the elements of the array. Then, in step $S_2$, the digital spectral information K of the signal level produced via the conversion circuit 17 and A/D conversion circuit 18 is stored in the spectral information memory sector 22a of the internal memory 22. Figure 4A illustrates an example of such digital spectral information. The spectral information, as an example that shown in Figure 4a, is approximated to the true value in step $S_3$, as aforesaid, by the spectral information compensation or modification means 24, and modified to the signal level shown in Figure 4B. Finally, in step $S_4$, a smooth signal level as shown in Figure 4C, is obtained by the averaging means 25.

Figure 6 is an enlarged version of Figure 4C and corresponds, for example, to a case in which a reflection diffraction spectrum of a $SiO_2$ specimen of film thickness of 3392 Å is output through an output device 15 such as a printer. The spectral information thus averaged is temporarily stored in an interim memory 22c, compared with the prestored reference data in the memory 22c by the comparison means 26 in step $S_5$, and then used for computations to determine the film thickness in computing means 27, and the result is output to the output device 15 which may be a CRT or a printer.

In Figure 2 the reference numeral 5a designates a semiconductor laser beam source and 5b is a photoelectric conversion means for photoelectric conversion of the monochromatic semiconductor laser beam reflected by the specimen 2. Laser source 5a is additionally installed so as to be a selectable alternative to the white light source 5, especially when it is desired to improve the precision in measuring a thin film less than 300 Å in thickness.

In the above-described apparatus an A/D converter 18 having a resolution of $2^{10}$ was used in order to obtain spectral information with a final resolution of more than $2^{10}$, but it is also possible to use an A/D converter having an ordinary resolution of $2^8$ to obtain a digital signal of a resolution of more than 1 in $2^{10}$ by one of the known data processing methods.

The apparatus and method described enable the thickness of a thin film to be determined accurately and rapidly.

As described above, the specimen is illuminated with white light, light reflected from the specimen is projected onto a fixed diffraction grating through a magnifying optical system so that a corresponding reflection diffraction spectrum is obtained, and the spectrum is then photoelectrically converted into digital signals for processing by a signal processing device such as a microcomputer. The photoelectric conversion means includes a one dimensional image sensor array, and the signals therefrom, output in parallel, are amplified and output serially by a parallel-to-series conversion circuit. The output signals are converted into digital signals by an A/D converter having a resolution of preferably more than $2^{10}$. The signal processing device is also provided with at least the sensitivity information characteristics of all the elements of one dimensional image sensor array, so that the aforesaid digital signals are modified to compensate for variations in sensitivity between elements. With the image signals output by the individual elements of the one dimensional image sensor array converted into digital signals by the A/D converter having a resolution of $2^{10}$ or more, the image signal level can be discriminated into more than 1,000 graduations. The variation in sensitivity among the individual elements of the one dimensional image sensor array is, as mentioned above, compensated for prior to the computation of the film thickness, so that a very broad dynamic range and very good signal can be obtained even by the use of a one dimensional image sensor array, and the spectral signals in a given range of wavelength can be obtained very rapidly.

An ample dynamic range and S/N (signal-to-noise) ratio obtained with the apparatus are comparable to those attainable by the use of a photomultiplier tube.

Enhanced precision in determining film thickness is obtained by utilizing this high discrimination to determine firstly the variations among individual elements of the one dimensional sensor array and compensating for them, as well as by using known averaging and statistical techniques to generate output for comparison to reference data obtained from film specimens of known thickness.

The apparatus and a method described above may provide a number of advantages over the prior art; thus:

(a) Since a one dimensional image sensor array is used as photoelectric conversion means, so that all the reflected spectral signals for one scan or sweep are obtainable simultaneously, it is possible to shorten the time required for making each measurement.

(b) Since no scanning means is required, the construction of the spectral means can be extremely simplified and also allows elimination of measuring errors due to scanning related disturbances, which further enhances measuring precision.

(c) When the inter-element variation of dark current and sensitivity of the one dimensional image sensor array are compensated for, so that the spectral signal level is modified to approach the true value, the same as or even higher reliability of spectral signal is attainable than when a conventional single photomultiplier is used.

The features disclosed in the foregoing description, in the following claims and/or the accompanying drawings may, both separately and in any combination thereof, be material for realising the invention in diverse forms thereof.

## CLAIMS

1. Apparatus for measuring the thickness of a film, the apparatus comprising: a diffraction grating for receiving light reflected by a film and for providing a diffraction spectrum of the light received thereby; photosensitive means for detecting a diffraction spectrum provided by the diffraction grating, the photosensitive means comprising an array of a photosensitive elements for each providing a signal representing light received thereby; and means for processing signals output by the photosensitive elements to determine the thickness of the film.

2. Apparatus according to Claim 1, wherein the photosensitive means further comprises a parallel-to-serial converter for converting signals output in parallel by the photosensitive means into series signals.

3. Apparatus according to Claim 1 or 2, wherein the photosensitive means outputs analogue signals and an analogue-to-digital converter is provided for converting the analogue signals into digital signals for supply to the signal processing means.

4. Apparatus according to Claim 1, 2 or 3, wherein the signal processing means comprises means for modifying the signals input thereto to take account of variations in the characteristics, for example sensitivity, of the individual photosensitive elements of the array.

5. Apparatus according to any preceding claim, wherein the signal processing means comprises means for averaging the signals input thereto to provide an average signal for each photosensitive element.

6. Apparatus according to any preceding claim, wherein the signal processing means comprises comparison means for comparing the spectral information received by the array with reference data to enable the thickness of a film to be determined.

7. A method of measuring the thickness of a film, the method comprising diffracting light reflected by a film to form a diffraction spectrum which is then incident on an array of photosensitive elements and processing signals output by the photosensitive elements of the array to determine the thickness of the film.

8.　A method according to Claim 7, further comprising converting analogue signals output from the photosensitive elements in parallel into series signals and digitizing the analogue signals before processing the signals to determine the film thickness.

9.　A method according to Claim 7 or 8, further comprising modifying the signals from the array during processing to take account of variations in characteristics, for example sensitivity, between individual elements of the array.

10.　A method according to claim 7, 8 or 9, further comprising averaging a plurality of the signals from the array prior to processing the signals to determine the film thickness.

11.　A method according to Claim 10, further comprising the further step of: comparing the distribution of the averaged signals, within a predetermined range, with a matching distribution of reference data more precisely to determine the thickness of the film.

Fig. 1 (Prior Art)

0197199

# Fig. 2

# Fig. 3

```
  ┌─────────┐
  │  INPUT  │
  └─────────┘
       │
┌────┐ │
│ SI │─┤
└────┘ │
       ↓
  ┌─────────┐
  │   S2    │── 22a
  └─────────┘
       │
       ↓
  ┌─────────┐
  │   S3    │── 24
  └─────────┘
       │
       ↓
  ┌─────────┐
  │   S4    │── 25
  └─────────┘
       │
       ↓
  ┌─────────┐
  │   S5    │── 26
  └─────────┘
       │
       ↓
  ┌─────────┐
  │   S6    │── 27
  └─────────┘
       │
       ↓
  ┌─────────┐
  │ OUTPUT  │
  └─────────┘
```

3/4

0197199

# Fig. 4

(A)

(B)

(C)

# Fig. 7

P

# Fig. 5

(a)  (b)  (c)  (d)

$\lambda_A$  (λ)    (R)  $\lambda_B$  (λ)    (R)  $\lambda_C$  (λ)    (R)  $\lambda_D$    $\lambda_E$ (λ)

# Fig. 6

(%)

400  500  600  700  800

(nm)

European Patent Office

**EUROPEAN SEARCH REPORT**

Application number

| | DOCUMENTS CONSIDERED TO BE RELEVANT | | EP 85115616.6 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | DE - A1 - 2 935 716 (ASAHI-DOW) <br> * Totality * <br> -- | 1,3,6, 7,8 | G 01 B 11/06 |
| X | US - A - 4 308 586 (COATES) <br> * Totality * <br> -- | 1,7 | |
| A | GB - A - 2 069 130 (RCA) <br> * Totality * <br> -- | | |
| A | US - A - 3 645 623 (PATTEN) <br> * Totality * <br> ---- | | |

| | TECHNICAL FIELDS SEARCHED (Int. Cl.4) |
|---|---|
| | G 01 B 9/00 <br> G 01 B 11/00 <br> G 01 N 21/00 |

The present search report has been drawn up for all claims

| Place of search | Date of completion of the search | Examiner |
|---|---|---|
| VIENNA | 28-07-1986 | TOMASELLI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82